Europäisches Patentamt

European Patent Office

Office européen des brevets

(19)

(11) Veröffentlichungsnummer: **0 149 225**
**B1**

(12) **EUROPÄISCHE PATENTSCHRIFT**

(45) Veröffentlichungstag der Patentschrift: **25.07.90**

(51) Int. Cl.⁵: **F 02 C 7/22**

(21) Anmeldenummer: **84116186.2**

(22) Anmeldetag: **22.12.84**

(54) **Einrichtung zur Kompensation von Druck- und Durchflussschwankungen in Brennstoffversorgungsanlagen von Gasturbinentriebwerken.**

(30) Priorität: **17.01.84 DE 3401397**

(43) Veröffentlichungstag der Anmeldung:
**24.07.85 Patentblatt 85/30**

(45) Bekanntmachung des Hinweises auf die
Patenterteilung:
**25.07.90 Patentblatt 90/30**

(84) Benannte Vertragsstaaten:
**FR GB**

(56) Entgegenhaltungen:
**CH-A- 267 493**
**DE-A-2 143 324**
**DE-B-1 158 903**
**FR-A-1 236 941**
**GB-A- 831 603**
**GB-A- 842 177**

(73) Patentinhaber: **MTU MOTOREN- UND TURBINEN-UNION MÜNCHEN GMBH**
**Dachauer Strasse 665 Postfach 50 06 40**
**D-8000 München 50 (DE)**

(72) Erfinder: **Eder, Wolf-D., Dipl.-Ing. (FH)**
**Danziger Strasse 6**
**D-8060 Dachau (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 149 225 B1

**Beschreibung**

Brennstoffversorgungsanlagen, z.B. von Strahltriebwerken, insbesondere von solchen mit Nachverbrennung, weisen zur Sicherstellung der benötigten Brennstoffmenge beim Eintritt in den Nachbrenner (es wird kurzfristig, < 1 Sekunde, eine Menge von mehreren Litern, ca. 5 1, benötigt) sogenannte "Druckspeicher" in der Nähe des Triebwerks auf, die u.a. mit Rücksicht auf einen bie Einschaltung der Nachverbrennung verlangten relativ kurzfristigen, hohen Brennstoffbedarf einen störenden Druckeinbruch im Brennstoffversorgungssystem verhindern sollen. Eine im Druckspeicher befindliche Gummiblase, die z.B. mit Stickstoff befüllt sein kann, drückt die vorgenannte Brennstoffmenge bei Druckabfall in der Brennstoffleitung in das System. Sobald sich die Brennstoffanlage durch Beschleunigen der Kraftstoffsäule in den Zufuhrleitungen wieder erholt hat, füllt sich dieser Druckspeicher wieder. Beim Rückgang aus dem Nachbrennerzustand in der Normalzustand des Triebwerks nimmt der Druckspeicher Druckspitzen auf. In jedem derartigen Brennstoffsystem mit Pumpenversorgung treten geringe, durch die Versorgungspumpe, aber auch durch das Triebwerk hervorgerufene Druckschwankungen auf (typisch: 0,1 bar bis 0,3 bar). Die Blase im Druckspeicher reagiert auf diese Druckschwankungen mit entsprechenden Volumenveränderungen, d.h. es werden dauernd kleine Brennstoffmengen in der Brennstoffversorgungsanlage hin und her bewegt und zusammen mit der tatsächlich zum Triebwerk fließenden Menge erfaßt und verarbeitet. Durch die Überlagerung werden Durchflußschwankungen und Meßfehler der Durchflußmeßanlage vorgetäuscht.

Aus der GB-A- 831,603 ist eine Brennstoffversorgungsanlage für Flugtriebwerke bekannt, die bei Ausfall der normalen pumpengeförderten Brennstoffversorgung aus einem Tank zum Triebwerk die alleinige Brennstoffweiterversorgung über einen Akkumulator bzw. Brennstoffdruckspeicher sicherstellen soll. Dabei ist für die alleinige akkumulatorische Brennstoffversorgung eine Druckluftsteuerung vorgesehen, und zwar im Wege eines z.B. membranartigen Kolbenventils, welches erst bei Unterschreitung eine vorgegebenen Brennstoffdruckes und damit einhergehender Abhebung des Kolbens von einer Ventilsitzfläche den Akkumulator an den stets am Ventil vorhandenen Förderdruck einer Druckluftquelle anschließt. Im bekannten Fall handelt es sich also nicht um ein zugleich Brennstoff-Füllung oder Brennstoffentleerung des Akkumulators selbsttätig steuerndes und dabei wechselseitig mal in der einen (Füllung) oder anderern Richtung (Entleerung) vom Brennstoff durchflutbares Druckspeicher-Entkoppelungsventil. Auch vermittelt der bekannte Fall keinen Hinweis darauf, wie bei einer Brennstoffversorgungsanlage mit Druckspeicher (z.B. mit Stickstoffblase) auftretende verhältnismäßig kleine und allgemein stets vorhandene Systemdruckschwankungen ohne Meßfehlervortäuschung beherrscht werden sollen.

Der Erfindung liegt die Aufgabe zugrunde, eine Einrichtung zur Kompensation von Druck- und Durchflußschwankungen bei einer Brennstoffversorgungsanlage von Gasturbinen-, insbesondere -strahltriebwerken, mit fallweiser Versorgungsmöglichkeit von Brennstoffeinspritzmitteln durch Pumpen- oder Druckspeicherförderung so auszubilden, daß der Druckspeicher von den pumpen- bzw. triebwerksbedingten relativ kleinen Druckschwankungen unbeeinflußt bleibt.

Die gestellte Aufgabe ist durch Patentanspruch 1 erfindungsgemäß gelöst.

Indem bei der Einrichtung das Ventil in der Absperrstellung nicht auf die relativ kleinen System-, und damit Differenzdruckänderungen reagiert, gelingt es, die erwähnten vorgetäuschten Durchflußschwankungen und Meßfehler auf verhältnismäßig einfachem Wege zu beseitigen.

Dabei gelingt es, den Druckspeicher im Wege des Differenzdruckes aus dem Speicherentleerungsdruck auf der einen und Pumpenförderdruck auf der anderen Seite zu füllen oder zu entleeren oder gegenüber der Pumpenversorgung abzusperren, indem zum Befüllen des Speichers stets ein höherer Differenzdruck in der Brennstoffversorgungsleitung erforderlich ist, als Druckschwankungen in der Anlage auftreten. Solange also der Öffnungsdruck des Ventils größer ist als die vor dem Ventil in der Brennstoffleitung herrschenden Druckschwankungen, sind diese nicht in der Lage, den Druckspeicher zu füllen bzw. zu den nachteilhaften empfindlichen Reaktionen zu veranlassen. Durch geeignete Wahl der Öffnungsdrücke des Ventils kann es insbesondere im Wege der Druckfedervorspannungskorrekturmöglichkeit an die betrieblichen Anforderungen optimal angepaßt werden, ohne die grundsätzliche Funktion des Druckspeichers zu beeinträchtigen.

Im Rahmen der Einrichtung kann ferner ein verhältnismäßig einfach aufgebautes, differenzdruckgesteuertes Ventil geschaffen werden, das entweder bei geringen Differenzdrücken absperrbar oder wahlweise in der einen (Speicherfüllung) oder anderen Strömungsrichtung (Speicherentleerung) durchflutbar ist.

Die Einzelventilglieder bzw. -ventile sowie sämtliche wesentlichen Ventilkomponenten sind u.a. im Wege einer teilweise zergliederten und rasch formschlüssig in- und aneinander fügbaren Ventilgehäusestruktur wartungsfreundlich montier- bzw. demontierbar.

Anhand der Zeichnungen ist die Erfindung beispielsweise weiter erläutert; es zeigen:

Fig. 1 die Einrichtung in Verbindung mit einer schematisch dargestellten Nachbrennerbrennstoffversorgungsanlage eines Turbinenstrahltriebwerks,

Fig. 2 eine erste Ausführungsform eines als Mittellängsschnitt dargestellten Ventils der Einrichtung und

Fig. 3 ein gegenüber Fig. 2 insbesondere bezüglich der Möglichkeit der jeweiligen Druckfederjustierbarkeit abgewandeltes Ventil der Einrichtung, ebenfalls als Mittellängsschnitt dargestellt.

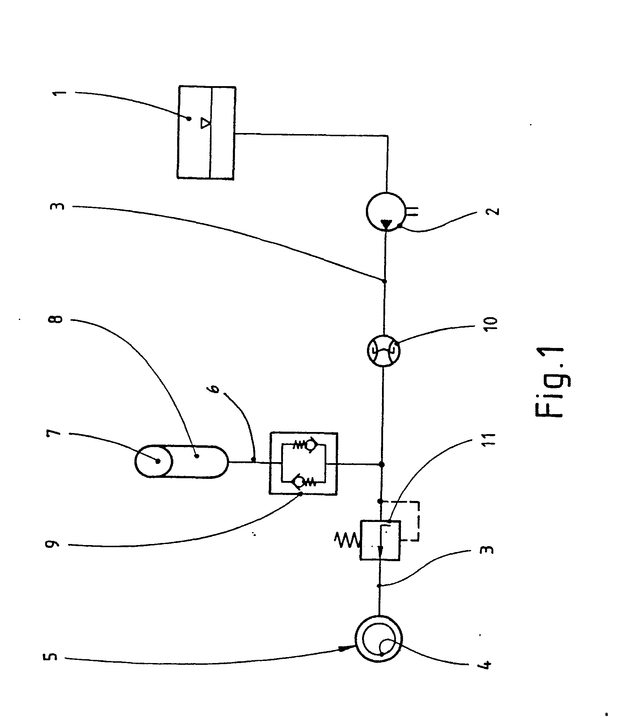

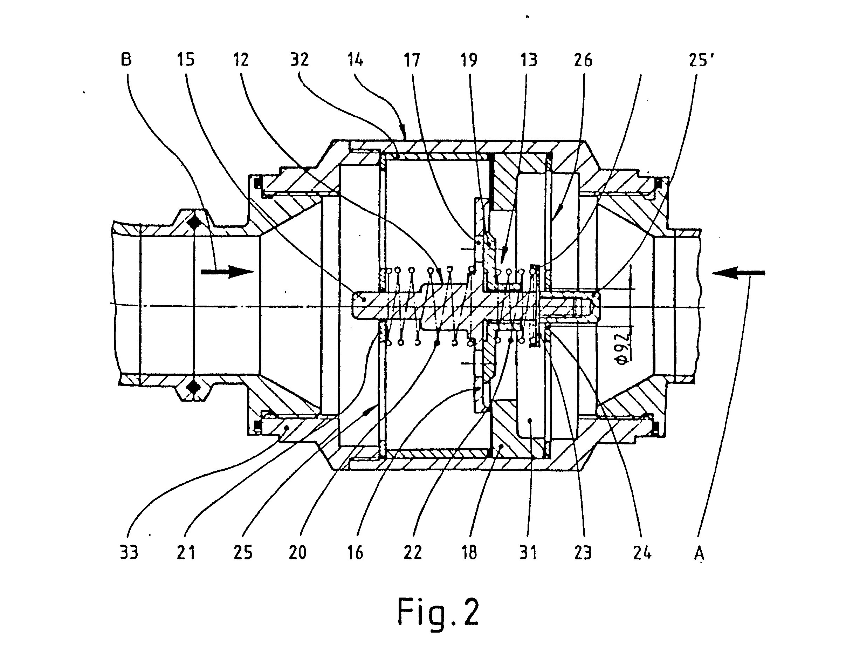

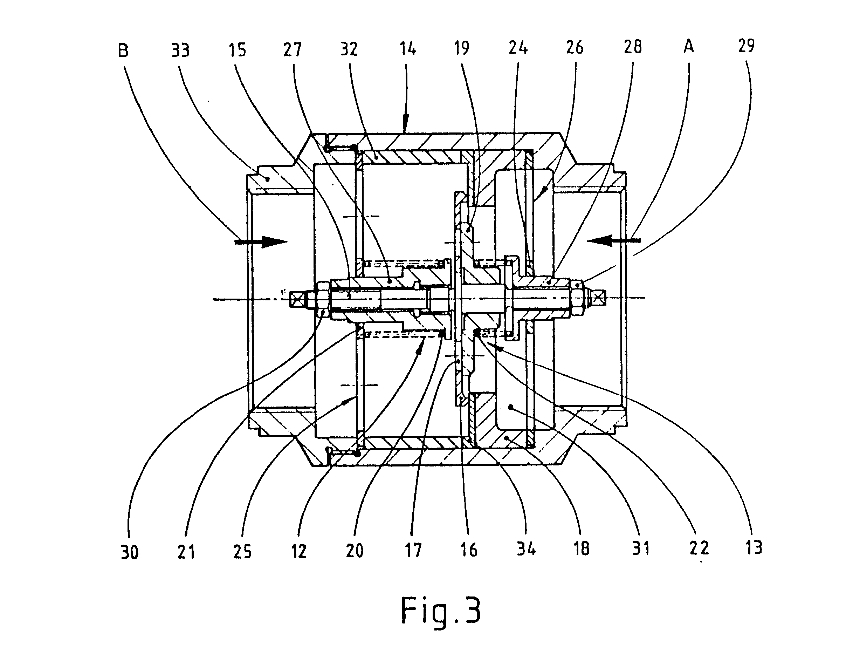

Fig. 1 erläutert die Einrichtung zur Kompensation von Druck- und Durchflußschwankungen bei einer Nachbrennerbrennstoffversorgungsanlage eines Turbinenstrahltriebwerks, wobei eine den Brennstoff aus einem Tank 1 ansaugende Tankpumpe 2 den Brennstoff über eine Versorgungsleitung 3 den Brennstoffeinspritzmitteln (Einspritzring 4) des Nachbrenners 5 zuführt. In Triebwerksnähe kommuniziert die Versorgungsleitung 3 über eine Leitungsverbindung 6 mit einem eine Stickstoffblase 7 enthaltenden Druckspeicher 8. Ein in Fig. 1 schematisch wiedergegebenes und im Rahmen der Fig. 2 und 3 detailliertes Ventil 9 ist in die Leitungsverbindung 6 — zwischen Druckspeicher 8 und Brennstoffversorgungsleitung 3 — geschaltet und in Abhängigkeit vom Differenzdruck zwichen dem Förderdruck des Speichers auf der einen und dem Pumpenförderdruck auf der anderen Seite selbsttätig arbeitend. Die Brennstoffversorgungsleitung 3 weist ferner eine der Tankpmpe 2 nachgeschaltete Druchflußmeßeinrichtung lo sowie ein den Brennstoffeinspritzmitteln (Einspritzring 4) vorgeschaltetes Druckregelventil 11 auf, welches in der technischen Fachsprache auch als sogenannter "Dom-Druck-Minderer" bezeichnet wird.

Es soll also das Ventil 9 der Einrichtung den Druckspeicher 8 bzw. dessen mit Stickstoff gefüllte Gummiblase 7 gegenüber den eingangs erwähnten Druckschwankungen von etwa 0,1 bis 0,3 bar in der Versorgungsanlage entlasten, d.h. der Druckspeicher 8 wird solange von der Brennstoffpumpenversorung abgekoppelt, solange der Ventilöffnungsdruck größer als die Druckschwankungen vor diesem Ventil 9 sind.

Gemäß Fig. 2 besteht das Ventil 9 aus zwei gegeneinandergeschalteten, einander entgegengerichtet durch Druckfedern 20, 22 belasteten Ventilgliedern 12, 13, mit denen es entweder bei gleichzeitig gemeinsamer Ventilgliedverstellung, z.B. auf einen vorgegebenen Druckspeicherförder- bzw. Entleerungsdruck ansprechend, in einer Richtung (Entleerungsrichtung A) oder, im Wege des lediglich einen, z.B. auf einen vorgegebenen Fülldruck ansprechenden Ventilglieds 13, in entgegengesetzter (Füllrichtung B) durchströmbar ist.

Das eine Ventilglied 12 weist einen zentral innerhalb des Ventilgehäuses 14 axial verschiebbar geführten Schaft 15 nebst Ventilsitzplatte 16 auf, die mit mehreren, einen gemeinsamen Gesamtdurchströmquerschnitt bildenden Öffnungen 17 versehen und ferner entlang ihres äußeren Radialwandbereichs an einem rotationssymmetrisch gegen das Gehäuseinnere radial auskragenden Bund 18 abdichtend zur Anlage bringbar ist (Ventilabsperr- oder Speicherfüllphase). Auf einer die Ventilsitzplatte 16 in Achsrichtung überkragenden Verlängerung des Schafts 15 des einen Ventilglieds 12 ist das andere Ventilglied 13 axial verschiebbar angeordnet, welches eine Sitzplatte 19 aufweist, mit der in der Ventilabsperr- oder Speicherentleerungsphase die Öffnungen 17 der benachbarten Ventilsitzplatte 16 verschließbar, hingegen zwecks Speicherfüllung freilegbar sind. Bezüglich Fig. 2 verkörpert also die darin angegebene Position der beiden Ventilglieder 12, 13 die Ventilabsperrstellung; der für die Speicherentleerung benötigte Ventildruchströmquerschnitt wird also infolge zunehmenden Abhebens der Ventilsitzplatte 16 vom Bund 18 zunehmend geöffnet, wobei die Öffnungen 17 verschlossen bleiben, d.h. also beide Ventilglieder 12,13 werden dabei gleichzeitig gemeinsam entgegen der Vorspannung der einen Druckfeder 20 bewegt.

Gemäß Fig. 2 stützt sich die Druckfeder 20 des einen Ventilglieds 12 an dessen Sitzplattenrückwand auf der einen sowie an einem gehäusefesten scheibenartigen Abschnitt 21 auf der anderen Seite ab. Die Druckfeder 22 des anderen Ventilglieds 13 stützt sich einerseits an dessen Druckplattenrückwand und andererseits an einem mit der Ventilschaftverlängerung des einen Ventilglieds 12 gekoppelten Federanschlag 23 ab.

Das Ventil nach Fig. 2 sieht ferner einen weiteren gehäusefesten, scheibenartigen Abschnitt 24 vor, der mit dem übrigen gehäusefesten scheibenartigen Abschnitt 21 als Axialführung des Ventilschafts 15 bzw. dessen Verlängerung ausgebildet ist. Es ist also gemäß Fig. 2 die auf der rechten Seite von dem Federanschlag 23 ausgehende Verlängerungspartie des Ventilschafts 15 über eine Buchse 25 in dem betreffenden scheibenartigen Abschnitt 24 axial verschiebbar geführt.

Die beiden zuvor genannten scheibenartigen Abschnitte 21, 24 sind jeweils Bestandteile von das Ventilgehäuse 14 in Querrichtung durchsetzenden Scheibenkörpern 25, 26, die zur Ventildurchflutung ausgespart und im Bereich deren zugehörigen Außenränder am Ventilgehäuse 14 festgelegt bzw. festklemmbar sind.

Unter Verwendung gleicher Bezugszeichen für funktionell gleiche oder äquivalente Bauteile verkörpert Fig. 3 gegenüber Fig. 2 im wesentlichen eine Ventilabwandlung dergestalt, daß die jeweilige Druckfedervorspannung den betrieblichen Verhältnissen gemäß justierbar sein soll. Im wesentlichen hierzu soll beim Ausführungsbeispiel nach Fig. 3 auf den Ventilschaft 15 des einen Ventilglieds 12 auf der einen Seite eine Spannhülse 27 aufgeschraubt und auf der anderen, die Ventilschaftverlängerung enthaltende Seite eine Buchse 28 aufgesetzt sein. Spannhülse 27 und Buchse 28 sollen dabei ferner zur jeweils einseitigen Abstützung der betreffenden Druckfeder 20 bzw. 22 sowie zur Ventilaxialführung ausgebildet sein; dabei kann die Vorspannung der einen Druckfeder 22 mittels einer auf die buchsenseitige Verlängerung des Ventilschafts 15 aufgeschraubten Mutter 29, die Vorspannung der anderen Druckfeder 20 mittels der Spannhülse 27 korrigierbar sein, nachdem für den letzteren Fall zuvor eine auf das übrige Ventilschaftende aufgeschraubte Mutter 30 gelöst worden ist.

Wie in Fig. 2 und 3 ferner verdeutlicht, kann der ins Gehäuseinnere radial auskragende Bund 18 Bestandteil eines ringförmigen Gehäuseeinsatzes 31 sein, der zwischen einer gehäuseinnenseitigen Abstandshülse 32 auf der einen Seite und der äußeren Umfangswand des einen Scheibenkörpers 26 auf der anderen Seite am Ventilgehäuse 14 festlegbar ist. Der andere Scheibenkörper 25 ist zwischen dem übrigen freien Ende der Abstandshülse 32 und einer angrenzenden Stirnfläche eines lösbaren Gehäusestrukturbauteils 33 festlegbar.

Wie ferner insbesondere aus Fig. 3 entnehmbar, kann der Bund 18 des ringförmigen Einsatzes 31 auf der der Ventilsitzplatte 16 zugekehrten Seite mit einer weichelastischen Dichtmanschette 34 versehen sein. Diese Dichtmanschette 34 kann als auswechselbares Bestandteil ausgebildet bzw. vorn herein Bestandteil des ringförmigen Einsatzes 31 sein bzw. könnte sie z.B. im Wege eines Aufspritzens erzeugt werden.

Insbesondere im Hinblick auf die angegebene teilzergliederte Ventilgehäusestruktur gemäß Fig. 2 und 3 ist eine vergleichsweise einfache Montage bzw. Demontage des Ventils gegeben; nach dem Lösen des Gehäusestrukturbauteils 33 können nacheinander u.a. die Bauteile 25, 32, 31, 26 — von rechts nach links — leicht nebst Ventilgliedern 12 und 13 aus dem Ventilgehäuse 14 herausgelöst werden bzw. in umgekehrter Reihenfolge — von links nach rechts — wieder eingebaut werden.

## Patentansprüche

1. Einrichtung zur Kompensation von Druck- und Durchflußschwankungen einer Brennstoffversorgungsanlage von Gasturbinentriebwerken, insbesondere Gasturbinenstrahltriebwerken, mit einer durch Pumpenförderung Brennstoff zu Brennstoffeinspritzmitteln (4) führenden Versorgungsleitung (3), an die ein Druckspeicher (8) angeschlossen ist, wobei in eine Leitungsverbindung (6) zwischen Speicher und Versorgungsleitung (3) ein aus der Druckdifferenz zwischen Speicher- und Pumpenförderdruck betätigtes Ventil (9) geschaltet ist, welches eine Brennstoffüllung oder -entleerung des Druckspeichers (8) steuert, und welches zwei zentral in einem Ventilgehäuse (14) angeordnete, einander entgegengerichtet durch Druckfedern (20, 22) belastete, jeweils eine Sitzplatte (16, 19) enthaltende Ventilglieder (12, 13) aufweist, wobei das eine Ventilglied (12) mit einem axial verschiebbar geführten Schaft (15) versehen ist, auf dem das andere Ventilglied (13) axial verschiebbar angeordnet ist, und mit einem gehäuseinnenseitig radial vorstehenden Bund (18), der einen Absperranschlag gegenüber der Sitzplatte (16) des einen Ventilglieds (12) ausbildet, die Durchgangsöffnungen (17) aufweist, welche unter Ausbildung eines von der einen Ventilseite aus beaufschlagten Ventildurchströmquerschnitts von der Sitzplatte (19) des anderen Ventilglieds (13) entweder zur Speicherfüllung freigegeben oder — neben der Ruhestellung auch dann verschlossen sind, wenn die Sitzplatte (16) des einen Ventilglieds (12) durch Abheben vom Bund (18) zur Speicherentleerung einen von der anderen Ventilseite aus beaufschlagten Ventildurchströmquerschnitt ausbildet.

2. Einrichtung nach Anspruch 1, dadurch gekennzeichnet, daß bei dem Ventil (9) die Druckfeder (20) des einen Ventilglieds (12) sich im wesentlichen an dessen Sitzplattenrückwand auf der einen sowie an einem gehäusefesten scheibenartigen Abschnitt (21) auf der anderen Seite abstützt.

3. Einrichtung nach Anspruch 1 und 2, dadurch gekennzeichnet, daß sich bei dem Ventil (9) die Druckfeder (22) des anderen Ventilglieds (13) einerseits an dessen Druckplattenrückwand und andererseits an einem mit der Ventilschaftverlängerung des einen Ventilglieds (12) gekoppelten Federanschlag (23) abstützt.

4. Einrichtung nach den Ansprüchen 1 bis 3, dadurch gekennzeichnet, daß das Ventil (9) einen weiteren gehäusefesten, scheibenartigen Abschnitt (24) aufweist, der mit dem gehäusefesten scheibenartigen Abschnitt (21) als Axialführung des zum einen Ventilglied (12) gehörenden Ventilschafts (15) bzw. dessen Verlängerung ausgebildet ist.

5. Einrichtung nach den Ansprüchen 1 bis 4, dadurch gekennzeichnet, daß bei dem Ventil (9) die beiden scheibenartigen Abschnitte (21, 24) jeweils Bestandteile das Ventilgehäuse (14) in Querrichtung durchsetzender Scheibenkörper (25, 26) sind, die zur Ventildurchflutung ausgespart und im Bereich der Außenränder am Ventilgehäuse (14) festgelegt sind.

6. Einrichtung nach den Ansprüchen 1 bis 5, dadurch gekennzeichnet, daß bei dem Ventil (9) die jeweilige Druckfedervorspannung den betrieblichen Verhältnissen gemäß justierbar ist.

7. Einrichtung mit einem Ventil nach Anspruch 7, dadurch gekennzeichnet, daß auf den Ventilschaft (15) des einen Ventilglieds (12) auf der einen Seite eine Spannhülse (27) aufgeschraubt und auf der anderen, die Ventilschaftverlängerung enthaltende Seite eine Buchse (28) aufgesetzt ist, worin Spannhülse (27) und Buchse (28) zur jeweils einseitigen Abstützung der betreffenden Druckfeder (20, 22) sowie zur Ventilaxialführung ausgebildet sind, und worin die Vorspannung der einen Druckfeder (22) mittels einer auf die buchsenseitige Ventilschaftverlängerung aufgeschraubten Mutter (29), die Vorspannung der anderen Druckfeder (20) mittels der Spannhülse (27) korrigierbar ist, wenn eine auf das übrige Ventilschaftende aufgeschraubte Mutter (30) gelöst ist.

8. Einrichtung nach den Ansprüchen 1 bis 7, dadurch gekennzeichnet, daß bei dem Ventil (9) der ins Gehäuseinnere radial vorstehende Bund (18) Bestandteil eines ringförmigen Gehäuseeinsatzes (31) ist, der zwischen einer gehäuseinnenseitigen Abstandshülse (32) auf der einen und der äußeren Umfangswand des einen Scheibenkörpers (26) auf der anderen Seite am Ventilgehäuse (14) festgelegt ist, und worin der andere Scheibenkörper (25) zwischen dem übrigen Ende der Abstandshülse (32) und einer angrenzenden Stirnfläche eines lösbaren Gehäusestrukturbauteils (33) festgelegt ist.

## Revendications

1. Dispositif pour la compensation de fluctuations de pression et de débit dans des installations d'alimentation en carburant pour turbines à gaz, en particulier pour turboréacteurs à gaz, comportant une conduite d'alimentation (3) menant au moyen de refoulement par pompe du carburant à des moyens d'injection de carburant (4), conduite à laquelle est raccordé un accumulateur de pression (8), une soupape (9), actionnée par la différence de pression entre pression de l'accumulateur et pression de refoulement, étant mise en circuit dans une liaison de conduite (6) située entre accumulateur et conduite d'alimentation (3), la soupape (9) commandant le remplissage en carburant ou une sortie de carburant de l'accumulateur de pression (8) et présentant deux organes de soupape (12, 13) disposés centralement dans un carter de soupape (14), sollicités par des ressorts de compression (20, 22) respectivement en sens opposés et contenant chacun une plaque de siège (16, 19), un des organes de soupape (12) étant pourvu d'une tige (15) guidée pour se déplacer axialement sur laquelle est disposé l'autre organe de soupape (13) avec déplacement possible dans l'axe, et comportant une collerette (18) faisant saillie radialement du côté intérieur du carter, qui forme une butée d'isolation vis-à-vis de la plaque de siège (16) de l'organe de soupape (12) qui présente des orifices de passage (17) qui, en formant une section transversale d'écoulement de soupape sollicitée d'un côté de la soupape, sont soit dégagés de la plaque de siège (19) de l'autre organe de soupape (13), en vue du remplissage de l'accumulateur, soit obturés — près de la position de repos — lorsque la plaque de siège (16) de l'un des organes de soupape (12) forme, du fait du soulèvement au-dessus de la collerette (18) une section transversale d'écoulement de la soupape qui est sollicitée depuis l'autre côté de la soupape, en vue du vidage de l'accumulateur.

2. Dispositif selon la revendication 1, caractérisé en ce que, dans la soupape (9), le ressort de compression (20) de l'organe de soupape (12) s'appuie essentiellement sur sa paroi arrière de plaque de siège d'un côté ainsi que, de l'autre côté, sur une partie (21) en forme de disque fixe sur le carter.

3. Dispositif selon la revendication 1 et 2, caractérisé en ce que, dans la soupape (9), le ressort de compression (22) de l'autre organe de soupape (13) s'appuie d'un côté essentiellement sur sa paroi arrière de plaque de pression et, de l'autre côté, sur une butée de ressort (23) accouplée à un prolongement de tige de soupape de l'organe de soupape (12).

4. Dispositif selon les revendications 1 à 3, caractérisé en ce que la soupape (9) présente une autre partie (24) en forme de disque, fixe sur le carter, qui est réalisée, avec la partie (21) en forme de disque et fixe sur le carter, sous forme de guidage axial de la tige de soupape appartenant à l'organe de soupape (12) ou à son prolongement.

5. Dispositif selon les revendications 1 à 4, caractérisé en ce que, dans la soupape (9), les deux parties (21, 24) en forme de disque font chacune partie de corps de disque (25, 26) traversant le carter de soupape (14) dans le sens transversal, évidées en vue de laisser passage à l'écoulement dans la soupape et fixées sur le carter de soupape (14) dans la zone des bords extérieurs.

6. Dispositif selon les revendications 1 à 5, caractérisé en ce que, dans la soupape (9), chaque précontrainte respective des ressorts de compression est réglable en fonction des conditions opératoires.

7. Dispositif selon la revendication 7, caractérisé en ce que, sur la tige de soupape (15) de l'organe de soupape (12), une douille de serrage (27) est vissée d'un côté et une douille (28) est appliquée de l'autre, côté, côté contenant le prolongement de la tige de soupape, dispositif dans lequel la douille de serrage (27) et la douille (28) servent à constituer un appui, chaque fois sur un côté, des ressorts de compression (20, 22), ainsi qu'au guidage axial de la soupape, et dans lequel la précontrainte du ressort de compression (22) est susceptible d'être corrigée au moyen d'un écrou (29) vissé sur le prolongement, côté douille, de la tige de soupape, et la précontrainte de l'autre ressort de compression (20) au moyen de la douille de serrage (27), lorsqu'on a desserré un écrou (30) vissé sur le restant de l'extrémité de tige de soupape.

8. Dispositif selon les revendications 1 à 7, caractérisé en ce que, dans la soupape (9), la collerette (18) faisant saillie radialement à l'intérieur du carter est une partie d'une garniture de carter (31) annulaire, qui est fixée sur le carter, entre une douille d'écartement (32) située côté carter, d'un côté, et la paroi circonférentielle extérieure du corps de disque (26), de l'autre côté, et dispositif dans lequel l'autre corps de disque (25) est fixé entre l'extrémité restante de la douille d'écartement (32) et une surface frontale adjacente d'un élément de construction (33) démontable de la structure du carter.

## Claims

1. A device for compensating for fluctuations in pressure and through-flow in a fuel supply system for gas turbine propulsion units, particularly gas turbine jet propulsion units, and comprising a supply pipe (3) conveying fuel by pumped delivery to fuel injection means (4) and to which a pressure storage means (8) is connected, there being in a connecting pipe (6) between storage means and supply pipe (3) a valve (9) which is actuated by the pressure differential between storage pressure and pump delivery pressure and which controls a filling or emptying of the pressure storage means (8) with fuel and which comprises, disposed centrally in a valve housing (14), two oppositely facing valve members (12, 13) biased by thrust springs (20, 22) and each comprising a seating plate (16, 19), one valve member (12) being provided with an axially displaceably guided stem (15) on which the other valve member (13) is disposed for axial displacement, and with, projecting radially on the inside of the housing, a shoulder (18) which constitutes a shut-off abutment in respect of the seating plate (16) of one valve member (12) and which incorporates through-flow apertures (17) which, forming a valve through-flow cross-section to which a medium is applied from one side of the valve, is either exposed by the seating plate (19) of the other valve member (13) in order to fill the storage means or — in addition to the inoperative position — can also be closed when the seating plate (16) of one valve member (12), by being lifted off the shoulder (18), forms a valve through-flow cross-section to which medium is applied from the other side of the valve in order to empty the storage means.

2. A device according to Claim 1, characterised in that in the case of the valve (9) the thrust spring (20) of one valve member (12) is biased essentially on the rear wall of its seating plate at one end and on a disc-like portion (21) rigid with the housing, at the other.

3. A device according to Claim 1 and 2, characterised in that in the case of the valve (9) the thrust spring (22) of the other valve member (13) is biased at one end on the rear wall of its thrust plate and at the other on a spring abutment (23) coupled to the valve stem extension of a valve member (12).

4. A device according to Claims 1 to 3, characterised in that the valve (9) comprises a further disc-like portion (24) rigid with the housing and which with the disc-like portion (21) which is rigid with the housing is constructed as an axial guide for the valve stem (15) or its extension, which is part of a valve member (12).

5. A device according to Claims 1 to 4, characterised in that in the case of the valve (9) the two disc-like portions (21, 24) are in each case constituent parts of disc members (25, 26) which traverse the valve housing (14) in a transverse direction and which are recessed for valve flooding, being fixed on the valve housing (14) in the region of the outer edges.

6. A device according to Claims 1 to 5, characterised in that in the case of the valve (9) the relevant initial tension of the thrust spring is adjustable according to operating conditions.

7. A device comprising a valve according to Claim 7, characterised in that on the valve stem (15) of one valve member (12) there is screwed on one end a tensioning sleeve (27) and on the other, comprising the valve stem extension, there is placed a bush (28), tensioning sleeve (27) and bush (28) being constructed for unilateral biasing of the relevant thrust springs (20, 22) and for axial guidance of the valves, with facility for correcting the initial tension of one thrust spring (22) by means of a nut (29) screwed onto the valve stem extension on the bush side and for correcting the initial tension of the other thrust spring (20) by means of the tensioning sleeve (27), when a nut (30) screwed onto the other end of the valve stem is slackened.

8. A device according to Claims 1 to 7, characterised in that in the case of the valve (9) the shoulder (18) which projects radially into the housing interior is a component part of an annular housing insert (31) which is fixed on the valve housing (14) between a spacing sleeve (32) (on the inside of the housing) on one side and the outer peripheral wall of a disc member (26) on the other side, and in which the other disc member (25) is fixed between the other end of the spacing sleeve (32) and an adjacent end face of a removable component (33) of the housing structure.

Fig.1

Fig.2

Fig.3